Europäisches Patentamt

European Patent Office

Office européen des brevets

(11) Publication number: **0 181 044**
**B1**

(12) **EUROPEAN PATENT SPECIFICATION**

(45) Date of publication of patent specification: **16.08.89**

(51) Int. Cl.⁴: **A 01 B 33/06, A 01 B 49/02**

(21) Application number: **85201791.2**

(22) Date of filing: **05.11.85**

(54) Soil cultivating implements.

(30) Priority: **06.11.84 NL 8403369**

(43) Date of publication of application:
**14.05.86 Bulletin 86/20**

(45) Publication of the grant of the patent:
**16.08.89 Bulletin 89/33**

(84) Designated Contracting States:
**DE FR GB NL**

(56) References cited:
**DE-U-7 925 367**
**FR-A-2 324 215**
**FR-A-2 333 427**
**GB-A-2 020 951**
**GB-A-2 130 862**
**GB-A-2 137 061**
**GB-A-2 141 611**
**NL-A-7 401 699**
**NL-A-7 712 061**

(73) Proprietor: **C. van der Lely N.V.**
**Weverskade 10 P.O. Box 26**
**NL-3155 ZG Maasland (NL)**

(72) Inventor: **Van der Lely, Ary**
**10A Weverskade**
**Maasland (NL)**
Inventor: **Bom, Cornelis Johannes Gerardus**
**16 Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

# Description

This invention relates to soil cultivating implements or machines of the kind which comprise a frame portion movable over the ground, a row of soil working members that extends substantially horizontally perpendicular, or at least transverse, to the intended direction of operative travel of the implement or machine with each member power-drivable to revolve around an upwardly extending axis and with each member having at least one downwardly projecting soil working tool, a ground roller whose bodily level is adjustable relative to that of the soil working members located rearwardly of those members relative to said direction of travel, and an elongate soil collecting member located at or above ground level and between the soil working members and the ground roller with respect to said direction of travel. The expression "implement(s) or machine(s)" is shortened to "implement(s)" alone throughout the remainder of this document for the sake of brevity.

With an implement of the kind set forth as known from the Dutch Patent Application 7712061 the soil collecting member is arranged so as to be adjustable in position in substantially only one direction and this prevents it from operating satisfactorily under some of the many and varied operating circumstances in which such implements are used. Accordingly, an object of the present invention is to overcome this disadvantage by greatly increasing the scope for adjustment of the position of the soil collecting member of such an implement.

According to the invention, a soil cultivating implement of the kind set forth above is characterised in that the elongate soil collecting member is adjustably connected to the remainder of the implement by means which includes at least one pivotable polygonal linkage and parts by which the level thereof can be varied relative to that of the or each such linkage, said adjusting parts being disposed at the rear of the or each pivotable polygonal linkage relative to said direction of travel (A), including the rear pivots of the or each pivotable polygonal linkage and at least one upright arm in which a plurality of relatively spaced holes for each of said rear pivots is formed, the or each upright arm being a member of the, or of the corresponding, pivotable polygonal linkage.

A construction in accordance with the invention enables the soil collecting member to be adjusted upwardly, downwardly and longitudinally in position and as regards its inclination to the vertical thus allowing it readily to be brought to a disposition in which it will function in a substantially optimum manner under virtually all operating circumstances.

The U.K. Patent Application 2 130 862 relates to an implement of the kind set forth above whereby the soil collecting member is supported by spaced single arms, each of which is pivotal arranged by means of a pivot that is disposed to the rear of the collecting member with respect to the intended direction of travel and at the level of a carrier for said collecting member.

With this known construction the adjustment of the soil collecting member is limited.

The German G.M. DE-U-79 25 367 discloses a soil cultivating implement, that comprises a frame portion, movable over the ground, supporting a row of soil working members that extends substantially perpendicular to the extended direction of travel. Each soil working member is power driven to revolve around an upwardly extending axis.

To the rear of the said row of soil working members with respect to the direction of travel is disposed a supporting member, that rests on the ground during operation and is adjustable in height by means of spaced apart quadrilateral linkages.

For a better understanding of the invention, and to show how the same may be carried into effect, reference will now be made, by way of example, to the accompanying drawings, in which:

Figure 1 is a somewhat diagrammatic plan view of a soil cultivating implement constructed in accordance with the invention,

Figure 2 is a section, to an enlarged scale, taken on the line II-II in Figure 1,

Figure 3 is a plan view as seen in the direction indicated by an arrow III in Figure 3,

Figure 4 is a view, to an enlarged scale, as seen in the direction indicated by an arrow IV in Figure 3, and

Figure 5 is a partial rear elevation as seen in the direction indicated by an arrow V in Figure 2.

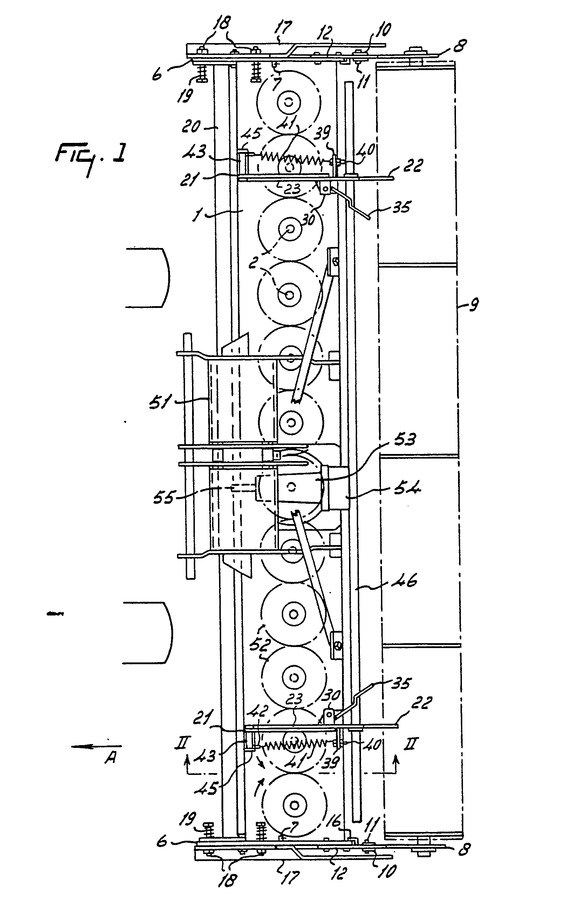

Referring to the accompanying drawings, the soil cultivating or tilling implement that is illustrated therein is in the form of a rotary harrow that is intended principally, but not exclusively, for the preparation of seed beds in previously worked agricultural soil. The implement has a hollow box-section frame portion 1 that extends substantially horizontally transverse and usually, as illustrated, substantially horizontally perpendicular, to the intended direction of operative travel of the implement that is indicated in Figures 1, 2 and 3 of the drawings by an arrow A. The top and bottom of the hollow frame portion 1 carry bearings in which a plurality, of which there are twelve in the example that is being described, of substantially vertical, or at least upwardly extending, shafts 2 are rotatably mounted with the axes of rotation of the twelve shafts 2 parallel to one another and spaced apart at regular intervals which advantageously, but not essentially, each have a magnitude of substantially 25 cms.

Each shaft 2 has a portion which projects downwardly from beneath the bottom of the hollow frame portion 1 and this downwardly projecting portion has the hub of a corresponding soil working member that is generally indicated by the reference 3 fastened to it in a secure but releasable manner. Each soil working member 3 comprises a substantially horizontal support or carrier 4 exhibiting arms which project substantially radially in opposite directions from the hub of that member 3. The outer ends of these carrier arms have upper fastening portions of corresponding soil working tools firmly but releasably secured to them, said tools being in the form of blade-like tines 5 whose soil working portions project downwardly into the ground from the carriers 4 to cut through the soil when the implement is in use.

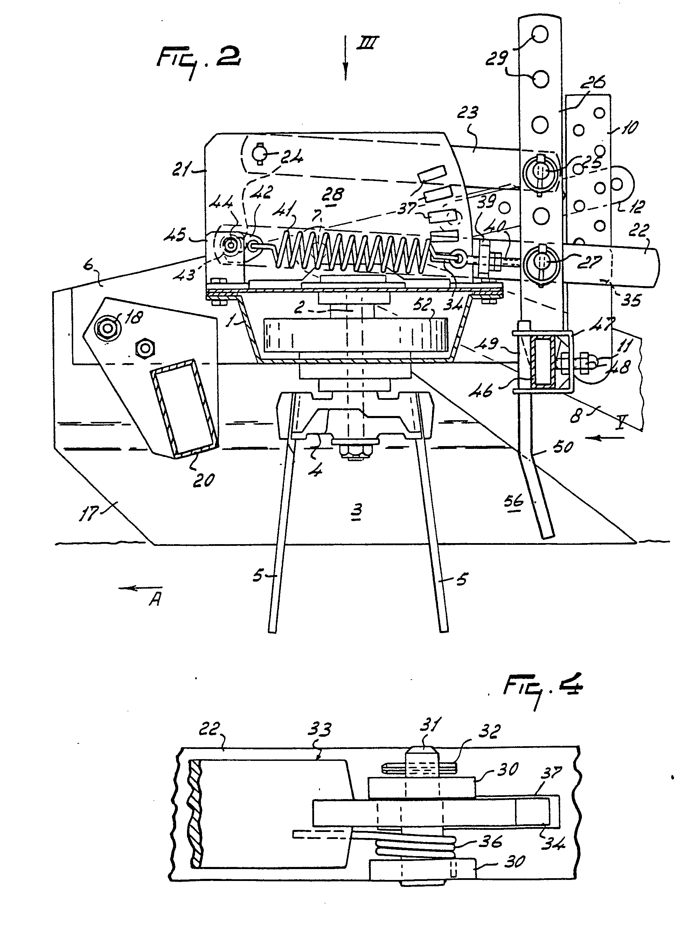

The opposite ends of the frame portion 1 are closed by corresponding side plates 6 that extend substantially vertically parallel to each other and to the direction A. Each of the symmetrically similar side plates 6 comprises portions which project forwardly in front of, and rearwardly behind, the remainder of the hollow frame portion 1 with respect to the direction A. In particular, the upper edge of each side plate 6 is inclined downwardly and forwardly with respect to the direction A (see Figure 2), this downward and forward bevel extending throughout the portion of that side plate 6 which projects forwardly beyond the frame portion 1 itself. Each side plate 6 also carries, close to its inclined upper edge and a short distance in advance of the row of shafts 2, a corresponding substantially horizontal pivot 7 that defines an axis which is parallel to the transverse length of the hollow frame portion 1, the two pivots 7 being in alignment with one another. The leading end of an arm 8 is turnably mounted on each pivot 7, the two arms 8 extending generally rearwardly from those pivots 7 alongside the respective plates 6. The two arms 8 are of progressively increasing width as the distance therealong from the pivots 7 increases and said arms 8 extend significant distances rearwardly from the two pivots 7, the rearmost ends of said arms 8 rotatably supporting a ground roller 9 which may advantageously, but not essentially, be an open-work, cage formation ground roller of the kind very diagrammatically illustrated in Figure 1 of the drawings. The ground-engaging cylindrical surface of this roller 9 is skeletally defined by a plurality of regularly spaced apart elongate tubular or rod-formation elements that are wound helically around the longitudinal axis of the roller 9 to some extent. The longitudinal axis/axis of rotation of the roller 9 extends substantially horizontally parallel to a plane containing the axes of rotation of the twelve, in this embodiment, shafts 2 and said roller 9 has a working width that registers with, and is of substantially the same magnitude as, the combined working widths of the twelve soil working members 3.

Each of the two arms 8 is provided, at a distance in front of the roller 9, with a guide 10 that is located approximately one third of the way along each arm 8 from the pivot 7 at the leading end thereof. Each guide 10 is of forked construction comprising two closely spaced apart limbs whose upper ends are integrally interconnected by a "base". The lower ends of the two limbs of each guide 10 are turnable about a corresponding pivot pin 11 that is carried by the arm 8 concerned and that defines a horizontal axis which is substantially parallel to the row of soil working members 3 and, usually, substantially perpendicular to the direction A. It will be evident from the drawings that the two limbs of each guide 10 are located at opposite sides of the corresponding arm 8. An upper region of each frame portion side plate 6 has the leading end of a corresponding strip-shaped support 12 fastened to it, said supports 12 being inclined upwardly and rearwardly, with respect to the direction A, from the respective plates 6 and being entered between the closely adjacent and parallel limbs of the corresponding guide 10. Each support 12 is formed, just in front of and just behind the front and rear edges of the two limbs of the co-operating guide 10, with holes in which respective stop bolts can be firmly but releasably mounted. The two limbs of each guide 10 are formed towards their front and rear edges with corresponding rows of substantially regularly spaced apart holes, the holes in one row being staggered relative to those in the other row as can clearly be seen in Figure 2 of the drawings. Retaining pins, bolts or the like can be entered through a chosen pair of aligned holes in either row in each of the guides 10 to lie beneath the corresponding supports 12 and carry the hollow frame portion 1 at a chosen horizontal level which will determine the maximum depth of penetration of the tines 5 of the soil working members 3 into the soil that is possible during the operation of the implement. If desired, pins, bolts or other retaining members can also be entered through appropriate holes in the limbs of the guides 10 at locations immediately above the two supports 12 to improve the stability of the whole assembly. When the implement is undergoing inoperative transport, the supports 12 are arranged to bear against the bases of the two forked guides 10 under which circumstances the roller 9 will be raised clear of contact with the ground by the lifting device or hitch of an agricultural tractor or other vehicle together with the twelve soil working members 3. Angular brackets 16 (Figure 1) are carried by the two arms 8 and embrace the rearmost edges of the frame portions side plates 6 to prevent said arms 8 from being bent away from those side plates 6.

Each frame portion side plate 6 has a corresponding shield plate 17 fastened to it. The two symmetrically identical shield plates 17 extend substantially vertically parallel to one another and to the direction A and it will be apparent from Figures 1 and 2 of the drawings that each shield plate 17 has an upper portion which lies against the side plate 6 concerned and a lower but relatively parallel portion that is outwardly off-set away from the upper portion by an intermediate bevel. The leading edge of each shield plate 17 is inclined steeply downwards and rearwards, with respect to the direction A, from approximately the same horizontal level as is the beveled junction between the upper and lower portions of that shield plate (see Figure 2) whereas the rearmost edge thereof, with respect to the same direction A, is downwardly and rearwardly inclined throughout substantially the whole of its length in parallel relationship with the downwardly and rearwardly inclined portion of the leading edge. The rearmost extremity of the substantially horizontal lower edge of each shield plate 17 is in approximate register with a vertical plane containing the leading extremity of the cylindrical surface of the ground roller 9 (see Figure 1) and this arrangement improves the co-operation between the opposite ends of the roller 9 and the rear ends of the neighbouring shield plates 17 as regards producing a uniform distribution of the worked soil which, in each such region, is crumbled between the shield plate 17 concerned and the neighbouring soil working member 3 for rearward delivery along the inner surface of said shield plate 17. The bevel between the upper and lower portions of each shield plate 17 produces the outward off-set of each lower portion and thus gives adequate spacing from the neighbouring end of the ground roller 9 to distribute the crumbled soil properly without any significant ridging thereof. The upper portion of each shield plate 17 is connected to the respective frame portion side plate 6 by two spaced and substantially horizontally disposed long bolts 18 both of which can be seen in Figure 1 of the drawings but only one of which is visable in Figure 2. The rear bolt 18 of each pair is at a higher horizontal level than is the leading bolt and the shanks of said bolts 18 are entered through holes in the frame portion side plates 6 with some degree of clearance. Each bolt 18 has a helical compression spring 19 wound around it so as to bear between its head and the inner surface of the frame portion side plate 6 concerned. This arrangement enables the shield plates 17 to yield outwardly away from the neighbouring soil working members 3, against the action of the springs 19 and in a generally pivotal manner, should the pressure of crumbled soil thereagainst become sufficient to compress the springs 19. Such a yielding displacement will temporarily increase the spacing of the or each affected shield plate 17 from the corresponding end or ends of the ground roller 9 and will allow the crumbled soil to continue to be distributed rearwardly in an optimum manner.

Alternative pairs of holes are provided in each side plate 6 for the connection thereto of the corresponding shield plate 7 by way of the elongate bolts 18. The alternative holes are at a higher level and further rearwards with respect to the direction A and, upon moving the shield plates 17 to a higher level substantially to match an adjustment of the implement to produce a greater working depth of the soil working members 3, rear portions of said shield plates 17 will not be fouled by the arms 8. In addition to co-operating with the neighbouring soil working members 3 in cultivating the soil, the shield plates 17 prevent stones and other hard objects from being flung laterally of the path of travel of the implement and thus tend to prevent damage and injury being caused in this way.

A protective member in the form of a beam 20 interconnects two brackets that are fastened to the forwardly projecting regions of the two frame portion side plates 6. The beam 20 is of hollow formation and oblong cross section, being disposed so that, as seen in cross section, its broader surfaces are inclined forwardly and upwardly with respect to the direction A whereas its narrower surfaces are inclined forwardly and downwardly relative to that direction. The beam 20 is at substantially the same horizontal level as the carriers 4 of the twelve soil working members 3 and its rear surface co-operates with those members 3 in crumbling the soil. The beam 20 prevents the soil working members 3, and particularly upper regions thereof, from encountering large stones and other hard potentially damaging objects and its leading upwardly and forwardly inclined surface, with respect to the direction A, tends to push any stones and other hard objects that it may encounter downwardly into the ground. The beam 20 co-operates with all twelve of the soil working members 3.

Two support plates 21 are provided on top of the hollow frame portion in substantially vertically parallel relationship with one another and with the direction A, each support plate 21 being located inwardly towards the centre of the hollow frame portion 1 from one end thereof by a distance which is such that it is disposed immediately inwardly towards said centre from the second shaft 2 along said frame portion counting from the adjacent end concerned. As can be seen in Figure 2 of the drawings, each support plate 21 is of basically oblong rectangular shape but the rearmost edge thereof, with respect to the direction A, is of arcuately curved configuration. A lower link 22 and an upper link 23 are located alongside each support plate 21 and have their leading ends pivotally connected to that support plate by corresponding pins 24 that extend substantially horizontally parallel to the row of soil working members 3, the pivot pin 24 corresponding to each lower link 22 being a little further advanced in the direction A than is the pivot pin 24 for the corresponding upper link 23.

Each pair of links 22 and 23 is located at that side of the corresponding support plate 21 which faces the centre of the implement and it will be noted from Figure 2 of the drawings that the pivot pins 24 which connect the lower links 22 to the support plates 21 are located vertically above a front rim of the hollow frame portion 1 and thus only a short distance rearwardly of a vertical plane which contains the foremost edge of that rim. The pivot pins 24 which connect the leading ends of the upper links 23 to the support plates 21 are located close to the upper edges of those support plates 21 but a significant distance rearwardly, with respect to the direction A, of the pins 24 corresponding to the lower links 22. As illustrated in Figure 2 of the drawings, the links 22 and 23 are in substantially parallel relationship with one another and it will be noted that each lower link 22 is significantly greater in length than is each upper link 23, the rearmost ends of the links 22 being located behind the guides 10.

The rearmost ends of the upper links 23 are pivotally connected by pins 25 to corresponding upright arms 26, said pins 25 being releasably entered through selected holes 29 in rows of such holes that are formed lengthwise along each upright arm 26. The pivot pins 25 are releasably entered through the selected holes 29 and are maintained in their appointed positions, for as long as may be required, by transverse retaining pins of known construction, having resilient handles, that can be seen in Figure 2 of the drawings. Similarly, the lower links 22 are pivotally connected by pins 27, extending substantially parallel to the pins 24 and 25, to the upright arms 26 again using appropriately chosen holes 29 in those arms 26 and further retaining pins, of the same known construction, to maintain any pivot pin 27 in the appropriate hole 29 for as long as may be required. The portions of the two lower links 22 that project rearwardly behind the upright arms 26 and guides 10, with respect to the direction A, afford handles which can be operated manually to move the links 22 and 23, together with the upright arms 26 and the parts which the latter carry and that will be described below, either upwardly or downwardly.

The lower and upper links 22 and 23 form parts of corresponding pivotable polygonal linkages 28 which linkages 28 are quadrilateral linkages but are not, however, parallelogram linkages since, as can be clearly be seen in Figure 2 of the drawings, the upper pivot pins 24 are nearer to the upper pivot pins 25 than are the lower pivot pins 24 to the lower pivot pins 27. The pivot pins 24 lie generally in advance of the soil working members 3 with respect to the direction A whilst the pivot pins 25 and 27 are behind those soil working members in regard to the same direction. The holes 29 which are chosen to connect the upright arms 26 to the rear ends of the lower and upper links 22 and 23 with the aid of the pins 27 and 25, respectively, can function to maintain the arms 26 in either an upwardly or a downwardly displaced position relative to the links 22 and 23 and the angularity of each quadrilateral linkage 28 can be changed by employing two holes 29 in each arm 26 that are spaced further apart from each other, or that are nearer to each other, than are the two shown as co-operating with the pins 25 and 27 in Figure 2.

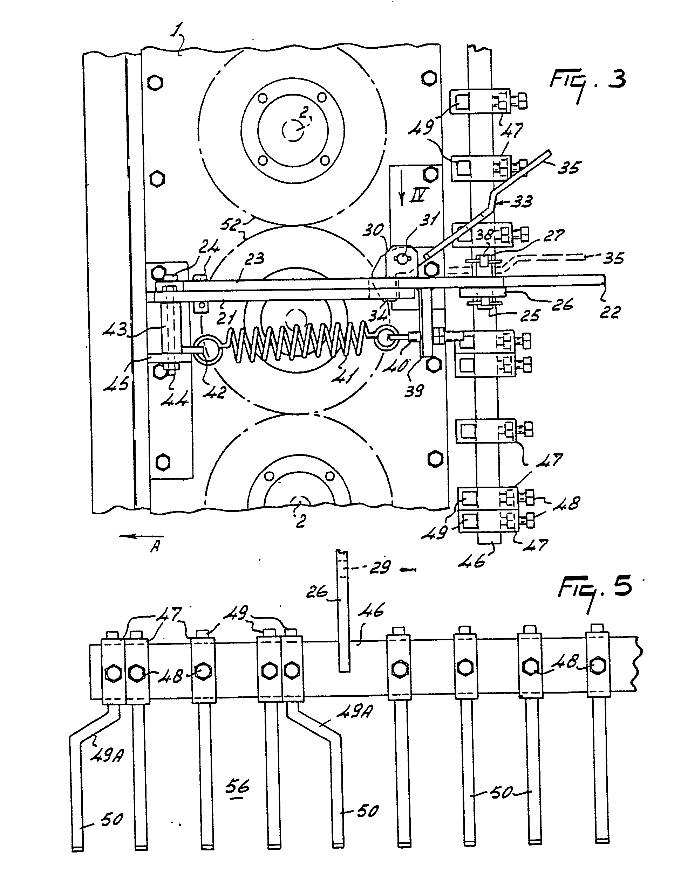

Means is provided to retain each quadrilateral linkage 28 in a chosen angular disposition and this means comprises a pair of lugs 30 (Figures 3 and 4 of the drawings) projecting towards the centre of the implement from the corresponding side of each lower link 22, said lugs 30 being in parallel but spaced relationship with one another. An upright pin 31 is entered upwardly through aligned holes in each pair of lugs 30 in such a way that its flat head lies against the bottom surface of the lower lug 30 concerned. A transverse retaining pin 32 of known construction is entered firmly but releasably through the upper end of each upright pin 31 at a location just above the corresponding upper lug 30. A latch 34 is turnably mounted on each pin 31 between the corresponding pair of lugs 30, said latch 34 being rigid with a rockable arm 33 whose rearmost end terminates in a handle 35. A spring 36 is wound helically around each pin 31 and its opposite ends engage the respective lower lug 30 and rockable arm 33 in such a way as to tend to turn the latch 34 and rockable arm 33 concerned in an anticlockwise direction as seen in Figure 3 of the drawings with the result that the latch 34 is urged through an oblong slot in the corresponding lower link 22 and into a chosen one of a plurality of oblong slots 37 (Figures 2 and 4 of the drawings) that are formed in a curved row in each support plate 21 alongside the curved rear edge of that support plate. The centre of curvature of each row of oblong slots 37 and of the curved rear edge of each support plate 21 coincides with the axis defined by the two lower pivot pins 24 that turnably connect the leading ends of the lower links 22 to the respective support plates 21. Each latch 34 can be maintained in a position in which it is not entered in any of the corresponding slots 37 by using the corresponding handle 35 to turn both it and the rockable arm 33 concerned angularly about the respective pin 31, against the action of the associated spring 36, until said arm 33 lies alongside the neighbouring lower link 22, such a position being shown in broken lines in Figure 3 of the drawings. Under these circumstances, one end of the corresponding pivot pin 27 passes through a hole in the rockable arm 33 under consideration, that end of the pin 27 being formed with a transverse hole into which a retaining pin 38 can be entered which will allow the links 22 and 23 to be turned upwardly and downwardly without restriction about the pivot pins 24 at their leading ends. However, upon releasing the rockable arms 33 to move into the positions shown in full lines in the drawings, the springs 36 will cause the latches 34 to enter chosen registering slots 37 and this will fix the angularity of the two quadrilateral linkages 28 until the latches 34 are again withdrawn from the slots 37. The two latching mechanisms that can be seen in Figure 1 of the drawings are, of course, of symmetrically identical construction.

Each lower link 22 is provided at the side thereof which is remote from the respective lugs 30 with a single perpendicularly projecting strong lug 39 whose general plane is more or less vertically disposed. A hole is formed through said lug 39 towards the free end thereof and the screw-threaded shank of an eye bolt 40 is entered through said hole and is provided, at the rear of the lug 39 relative to the direction A, with two adjustable nuts which will co-operate with one another in the manner of locknuts. A helical tension spring 41 is stretched between the eye of each bolt 40 and a hole formed in a lug 42 carried by a sleeve 43 that surrounds a bolt 44 extending horizontally between an opening near the front of the respective support plate 21 and a hole in an upright lug 45 mounted at the top and front of the hollow frame portion 1 at a short distance from said support plate 21 towards the neighbouring free end of the frame portion 1.

The lower ends of the two upright arms 26 are interconnected by a supporting beam 46 that extends substantially horizontally parallel to the row of soil working members 3 and thus usually substantially horizontally perpendicular to the direction A. Elongate elements 49 that extend substantially vertically are clamped to the front of the hollow formation and oblong cross section supporting beam 46 by the limbs of channel-shaped clamps 47 whose bases carry adjustable clamping bolts 48. Each element 49 has a soil engaging portion 50 and these portions 50 extend downwardly to a level which will usually be above ground level in regularly spaced apart relationship with one another across the working width of the implement. The soil engaging portion 50 of each element 49 trails downwardly and rearwardly (see Figure 2) at a small angle with respect to the direction A in the position that is illustrated in the drawings and, to enable the regular spacing between said portions 50 to be maintained without interfering at some points, with other members such as the upright arms 26, certain elements 49 include offset portions 49A that may advantageously be arranged in the manner illustrated in Figures 3 and 5 of the drawings. It will be noted from Figure 3 that each elongate element 49 is formed from rod material of square cross section, and, although this cross section is preferred, some other angular cross section may be used as an alternative. Each element 49 that does not include an off-set portion 49A extends more or less vertically downwards until the integral junction with the downwardly and rearwardly trailing soil engaging portion 50 is reached, this integral junction being of angular formation and being located just below the mid-point of the length of each element 49 (see Figure 2). The elongate elements 49, and particularly their soil engaging portions 50, together afford a soil collecting or accumulating member that is generally indicated by the reference 56. Preferably, the perpendicular spacing between the soil engaging portions 50 of two immediately neighbouring elongate elements 49 has a magnitude which is substantially five times the width of a single soil engaging portion 50 measured in a direction parallel to the length of the supporting beam 46.

The top and front of the frame portion 1 with respect to the direction A, is provided mid-way across its transverse width, with a coupling member or trestle 51 that is constructed and arranged for connecting the implement to a three-point lifting device or hitch at the rear of an agricultural tractor or other operating vehicle in a manner which is known per se, the position of such a tractor or other vehicle being indicated at the left of Figure 1 of the drawings by portions of its rear wheels. Each shaft 2 is provided, inside the hollow frame portion, with a corresponding straight or spur-toothed pinion 52, the sizes of said pinions 52 being such that the teeth of each of them are in mesh with those of the or each neighbouring pinion 52 in the single row of the twelve such pinions which are provided in the example that is being described. With this arrangement, each pinion 52, shaft 2 and soil working member 3 will revolve during the operation of the implement in the ooposite direction to the or each immediately neighbouring similar assembly as indicated by small arrows in Figure 1 of the drawings for two such neighbouring assemblies. The shaft 2 corresponding to one of the centre pair of shafts 2 in the single row of twelve such shafts has an upward extension through the top of the hollow frame portion 1 into a gear box 53 that is mounted on the frame portion 1 beneath parts of the coupling member or trestle 51. The gear box 53 has a rotary input shaft 55 which projects substantially horizontally forwards from the front thereof in substantially the direction A where it is splined or otherwise keyed to enable it to be placed in driven connection with the rear power take-off shaft of an agricultural tractor or other operating vehicle by way of an intermediate telescopic transmission shaft of known construction having universal joints at its opposite ends. Shafts and bevel pinions (not visible) within the gear box 53 place the rotary input shaft 55 thereof in driving connection with the upward extension of said one of the shafts 2 and this driving connection is by way of a change-speed gear 54 that is mounted at the back of the gear box 53.

The change-speed gear 54 is not the subject of the present invention and it suffices to say that, beneath a readily removable cover thereof, the splined or otherwise keyed ends of two parallel shafts are accessible and receive a co-operating pair of straight- or spur-toothed pinions whose meshing relationship with one another establishes a predetermined transmission ratio between the two shafts. The two pinions can be interchanged on the shaft ends or be exchanged for at least one alternative pair of co-operating pinions of different sizes to give any chosen one of a number of different transmission ratios. The particular transmission ratio which is established in the change-speed gear 54 determines the speed at which all of the soil working members 3 will revolve in response to a substantially fixed speed of rotation applied to the rotary input shaft 55 of the gear box 53.

Before commencing a soil cultivating operation with the implement that has been described, and whilst said implement is still raised clear of contact with the ground by the lifting device or hitch of the agricultural tractor or other vehicle to which it is then connected, the guides 10 and supports 12 can be arranged so that, when the implement is lowered into contact with the ground surface, the roller 9 will turn bodily upward about the aligned pivots 7 until the bolts or the like that are entered through selected holes in the guides 10 prevent further upward displacement about said pivots 7. This position will correspond to a pre-determined maximum depth of penetration of the soil working members 3 into the ground. The speed at which all of the members 3 will revolve in response to a substantially fixed speed of rotation applied to the input shaft 55 can be changed if required by an appropriate adjustment of the change-speed gear 54. These adjustments will usually be made in the light of the nature and condition of the soil that is to be cultivated by the implement and the particular purpose for which that soil is required after the cultivation has been completed.

As the implement is moved operatively in the direction A by the tractor or other vehicle to which its coupling member or trestle 51 is connected, the twelve, in this embodiment, soil working members 3 work individual strips of land that extend in the direction A but, since the effective working width of each individual member 3 is the same as, or a little greater than, the spacing between the axes of rotation of neighbouring shafts 2, those strips of land overlap, or at least adjoin, each other to produce a single broad strip of worked soil that, in the example which is being described, will have a width of substantially, although not necessarily exactly, 3 metres.

The shield plates 17 are yieldable outwardly away from the soil working members 3 at the opposite ends of the single row of those soil working members against the restoring action of the compression springs 19 which surround the shanks of the long bolts 18 and, with this construction, said shield plates 17 will yield outwardly as may be required to match the volume of displaced soil per unit time that passes rearwardly along their inner surfaces. The result is that the soil is worked by co-operation between the shield plates 17 and the immediately neighbouring soil working members 3 to substantially the same thorough extent as is produced by co-operation between immediately neighbouring soil working members at locations closer to the centre of the implement.

The soil collecting or accumulating member 56 which comprises the tooth-like soil engaging portions 50 of the elongate elements 49 preferably occupies a position, during operation of the implement, in which the lowermost ends of said portions 50 are spaced above ground level as is illustrated in Figure 2 of the drawings. Any large clods of earth that are moved rearwardly by the soil working member 3 will be caught by the soil collecting or accumulating member 56 which, due to the continuing progress in the direction A, will tend to break up such clods until they are small enough to pass between or under the portions 50 of the elements 49.

Any large and stubborn clod of earth will eventually be re-engaged by the blade-like tines 5 of the soil working members 3 and will eventually be broken up sufficiently to pass through the grating afforded by the member 56. Sufficiently crumbled soil can, of course, also pass beneath the lowermost ends of the soil engaging portions 50 of the elements 49 where those ends are spaced above the ground surface. The downwardly and rearwardly trailing disposition of the soil engaging portions 50 of the elongate elements 49 tends to allow uprooted weeds and other plant residues that they engage to be released downwardly.

The position of the soil collecting or accumulating member 56 can be adjusted relative to that of the pivotable quadrilateral linkages 28 by entering the pivot pins 25 and 27 through other chosen holes 29 in the upright arms 26. This adjustment facility not only allows the arms 26 to be moved upwardly or downwardly relative to the links 22 and 23 but also enables the rear ends of those links 22 and 23 to be brought closer to one another, or to be spaced further apart from one another, than is illustrated in Figure 2. The shapes of the pivotable quadrilateral linkages 28 are, of course, changed when such an adjustment is made bringing the links 22 and 23 out of their illustrated substantially parallel relationship with one another. The substantially vertical disposition of each of the upright arms 26 can also be changed in this way to one in which those arms 26 are significantly inclined to the vertical. For example, if, as seen in Figure 2 of the drawings, the illustrated lower link 22 maintains the position shown whilst the illustrated pivot pin 25 is employed to connect the rear end of the link 23 to the arm 26 at a considerably higher level, using an appropriately positioned hole 29, the upright arm 26 will take up an oblique position in which its upper end is further forwards, with respect to the direction A, than is its lower end. The elongate elements 49 of the soil collecting or accumulating member 56 will be similarly tilted and this will allow temporarily accumulated soil to be released rearwardly at a somewhat faster rate than occurs when the implement is disposed substantially as shown in Figure 2. Any such change in disposition of the member 56 influences the degree to which the soil is pulverized and this can be very useful having regard to the fact that the nature and condition of agricultural soil is very variable not only from place to place but from season to season and day to day. In addition to pivotally connecting the links 22 and 23 to the upright arms 26 at adjustable locations, it will be remembered that the angularity of each linkage 28 can be changed to raise or lower and/or to tilt the arms 26 by using the handles 35 to withdraw the latches 34 from particular slots 37, subsequently using the rear handle ends of the links 22 to move the linkages 28 either upwardly or downwardly and subsequently allowing the springs 36 to reenter the latches 34 in freshly chosen slots 37. If desired, the handles 35 can be retained in the positions shown in broken lines for one of them in Figure 3 of the drawings using the transverse holes in the ends of the lower pivot pins 27 and the transverse retaining pins 38. Under these circumstances, the soil collecting or accumulating member 56 can yield upwardly to increase the rate of soil release should a large accumulation of soil occur or should stones be collected. The quadrilateral linkages 28 will pivot upwardly against the action of the springs 41 which will tend to be additionally stretched to a small extent upon upward displacement of the links 22. The action of the springs 41 can be intensified or reduced by adjustment of the axial positions of the eye bolts 40, the lock nuts which are carried by the threaded shanks of the latter being employable to maintain any chosen initial tension of the springs 41 for as long as may be required.

The positions of the upper pivot pins 24 to the rear of the lower pivot pins 24, considered in the direction A, brings the upright arms 26 into upwardly and forwardly sloping oblique positions when the linkages 28 are angularly displaced in an upward direction, and this allows the soil collecting or accumulating member 56 more readily to release any soil or other material that it has accumulated. The several different ways of adjusting the position and inclination of the soil collecting or accumulating member 56 that are provided enable that member to co-operate efficiently with soil working members of different kinds such as, for example, ones having longer or shorter tines, entirely rigid tines and/or only one tine per soil working member 3 or three or more tines per soil working member 3. There may be circumstances in which the soil collecting or accumulating member is not required such as, for example, when working light soil that is very easily cultivated and it is then only necessary to raise the member 56 so far clear of the ground surface that it will not work the soil at all. It is even possible for the pivot pins 25 and 27 to be temporarily removed which allows the member 56 and the upright arms 26 to be released from the remainder of the implement until their employment is again necessary. In addition, the elongate elements 49 of the member 56 can be moved upwardly and downwardly relative to the channel-shaped clamps 47 and clamping bolts 48 to change the area of the grating which lies behind the soil working member 3 in the direction A and, moreover, the elongate elements 49 can be moved closer to, or further away from, one another to decrease or increase the spacing between them. This is undertaken merely by temporarily loosening the clamping bolts 48 and moving the clamps 47 along the supporting beam 46 as may be required. The large number of possible adjustments of the soil collecting or accumulating member 56 that are provided, as regards its effective area, its disposition relative to the ground surface, its inclination to the ground surface and the spacing between its elements 49, enables that member 56 to be arranged so that it will co-operate with the soil working members 3 in a substantially optimum manner under virtually all possible operating circumstances. Constructions are possible in which only a single linkage 28, or at least three relatively spaced linkages 28, is or are provided.

## Claims

1. A soil cultivating implement comprising a frame portion (1) movable over the ground, a row of soil working members (3) that extends substantially horizontally perpendicular, or at least transverse, to the intended direction of operative travel (A) of the implement with each member (3) power-drivable to revolve around an upwardly extending axis (2) and with each member (3) having at least one downwardly projecting soil working tool (5), a ground roller (9) whose bodily level is adjustable relative to that of the soil working members (3) located rearwardly of those members (3) relative to said direction of travel (A), and an elongate soil collecting member (56) located at or above ground level and between the soil working members (3) and the ground roller (9) with respect to said direction of travel (A), characterised in that the elongate soil collecting member (56) is adjustably connected to the remainder of the implement by means which includes at least one pivotable polygonal linkage (28) and parts (25, 26, 27) by which the level thereof can be varied relative to that of the or each such linkage (28), said adjusting parts (25, 26, 27) being disposed at the rear of the or each pivotable polygonal linkage (28) relative to said direction of travel (A), including the rear pivots (25, 27) of the or each pivotable polygonal linkage (28) and at least one upright arm (26) in which a plurality of relatively spaced holes (29) for each of said rear pivots is formed, the or each upright arm (26) being a member of the, or of the corresponding, pivotable polygonal linkage (28).

2. An implement according to claim 1, characterised in that the or each linkage (28) comprises lower (22) and upper (23) links, a spring (41) being provided which counteracts an upward movement of the said lower and upper links.

3. An implement according to claim 1 or 2, characterised in that the or each pivotable polygonal linkage is a pivotable quadrilateral linkage (28) two of whose pivotal axes (24) are located in advance, and two of whose pivotal axes (25, 27) are located behind the soil working members (3) with respect to the intended direction of operative travel (A) of the implement.

4. An implement according to claim 3, characterised in that the or each pivotable quadrilateral linkage (28) comprises lower (22) and upper (23) links, and in that the positions of the rear ends of said links (22, 23) are adjustable relative to one another employing said adjusting parts which are also usable to change the position of the soil collecting member (56).

5. An implement according to any preceding claim, characterised in that means (33, 34, 37) is provided by which the rear, with respect to the intended direction of operative travel (A) of the implement, of the or each pivotable polygonal linkage (28) can be retained in any chosen one of a plurality of different positions of adjustment.

6. An implement according to claim 5, characterised in that one link (22) of the or each pivotable polygonal linkage (28) co-operates with a latch (34) that is arranged so that it can enter any chosen one of a plurality of apertures (37) formed in spaced apart relationship with one another in a support member (21) mounted on top of the frame portion (1) which rotatably supports the soil working members (3).

7. An implement according to claim 6, characterised in that said apertures (37) are in the form of slots arranged in an arcuate row at equal distances from an axis defined by the lower leading pivot (24) of the, or of the corresponding, pivotable polygonal linkage (28).

8. An implement according to claim 4 or 5, characterised in said latch (34) is carried by an arm (33) that is rockable, against the action of a spring (36), around an upright pin or the like (31).

9. An implement according to claim 8, characterised in that the or each latch (34) is at the front of the, or of the corresponding, rockable arm (33) whereas the rear of that arm (33), with respect to the intended direction of operative travel (A) of the implement, takes the form of a manually operable handle (35).

10. An implement according to claim 8 or 9, characterised in that the or each spring (36) is wound around the corresponding upright pin or the like (31) and is arranged resiliently to oppose displacement of the associated rockable arm (33) around that upright pin or the like (31) in one direction.

11. An implement according to any preceding claim, characterised in that the implement comprises two horizontally spaced apart pivotable polygonal linkages (28), each being provided with corresponding adjusting parts (25, 26, 27).

12. An implement according to any preceding claim, characterised in that the soil collecting member (56) comprises a plurality of elongate elements (49) each of which has a downwardly projecting tooth-like soil engaging portion (50), and in that said soil engaging portions (50) are arranged in spaced apart side-by-side relationship with one another.

**Patentansprüche**

1. Bodenbearbeitungsgerät mit einem über den Boden bewegbaren Rahmenteil (1), mit einer sich im wesentlichen horizontal im rechten Winkel oder wenigstens quer zu der Arbeitsrichtung (A) des Gerätes erstreckenden Reihe von Bodenbearbeitungseinheiten (3), wobei jede Einheit (3) zur Drehung um eine sich nach oben erstreckende Achse (2) mechanisch antreibbar ist und wenigstens ein nach unten ragendes Bodenbearbeitungswerkzeug (5) aufweist, mit einer Bodenwalze (9), deren Höhenlage relativ zur Höhenlage der Bodenbearbeitungseinheiten (3) verstellbar ist und die sich in bezug auf die Arbeitsrichtung (A) hinter diesen Einheiten (3) befindet, und mit einer langgestreckten Boden-Sammelvorrichtung (56), die sich auf oder über Bodenhöhe befindet und in bezug auf die Arbeitsrichtung (A) zwischen den Bodenbearbeitungseinheiten (3) und der Bodenwalze (9) angeordnet ist, dadurch gekennzeichnet, daß die langgestreckte Boden-Sammelvorrichtung (56) mit dem übrigen Gerät durch eine Einrichtung einstellbar verbunden ist, die wenigstens ein schwenkbares polygonales Gestänge (28) sowie Teile (25, 26, 27) aufweist, durch die ihre Höhenlage relativ zu dem oder jedem Gestänge (28) veränderbar ist, wobei die Einstellteile (25, 26, 27) in bezug auf die Arbeitsrichtung (A) auf der rückwärtigen Seite des oder jedes schwenkbaren polygonalen Gestänges (28) angeordnet sind und die hinteren Schwenkzapfen (25, 27) des oder jedes schwenkbaren polygonalen Gestänges (28) sowie wenigstens einen aufrechten Arm (26) aufweisen, in dem mehrere mit Abstand voneinander befindliche Löcher (29) für jeden der hinteren Schwenkzapfen vorgesehen sind, wobei der oder jeder aufrechte Arm (26) ein Teil des oder des jeweiligen schwenkbaren polygonalen Gestänges (28) ist.

2. Gerät nach Anspruch 1, dadurch gekennzeichnet, daß das oder jedes Gestänge (28) ein unteres (22) und ein oberes (23) Gestängeglied aufweist, wobei eine Feder (41) vorgesehen ist, die einer nach oben gerichteten Bewegung des unteren und des oberen Gestängegliedes entgegenwirkt.

3. Gerät nach Anspruch 1 oder 2, dadurch gekennzeichnet, daß das oder jedes schwenkbare polygonale Gestänge ein Viergelenk-Gestänge (28) ist, das in bezug auf die Arbeitsrichtung (A) des Gerätes zwei vor den Bodenbearbeitungseinrichtungen (3) befindliche Gelenkachsen (24) und zwei hinter den Bodenbearbeitungseinrichtungen (3) befindliche Gelenkachsen (25, 27) aufweist.

4. Gerät nach Anspruch 3, dadurch gekennzeichnet, daß das oder jedes schwenkbare Viergelenk-Gestänge (28) ein unteres (22) und ein oberes (23) Gestängeglied aufweist, und daß die hinteren Enden der Gestängeglieder (22, 23) unter Verwendung der Einstellteile in ihrer Lage zueinander verstellbar sind, wobei die Einstellteile auch zum Verändern der Position der Boden-Sammelvorrichtung (56) verwendbar sind.

5. Gerät nach einem der Ansprüche 1 bis 4, dadurch gekennzeichnet, daß eine Einrichtung (33, 34, 37) vorgesehen ist, durch die der in bezug auf die Arbeitsrichtung (A) des Gerätes rückwärtige Bereich des oder jedes schwenkbaren polygonalen Gestänges (28) in jeder beliebigen gewählten von mehreren verschiedenen Einstellpositionen feststellbar ist.

6. Gerät nach Anspruch 5, dadurch gekennzeichnet, daß ein Gestängeglied (22) des oder jedes schwenkbaren polygonalen Gestänges (28) mit einem Verriegelungsglied (34) zusammenwirkt, das derart angeordnet ist, daß es in eine beliebige gewählte von mehreren Öffnungen (37) gelangen kann, die mit Abstand voneinander in einem Trageglied (21) ausgebildet sind, das auf dem Rahmenteil (1) angebracht ist, welches die drehbaren Bodenbearbeitungseinheiten (3) trägt.

7. Gerät nach Anspruch 6, dadurch gekennzeichnet, daß die Öffnungen (37) als Schlitze ausgebildet sind, die in einer bogenförmigen Reihe in gleichen Abständen von einer Achse angeordnet sind, die durch den unteren vorderen Schwenkpunkt (24) des oder des jeweiligen schwenkbaren polygonalen Gestänges (28) definiert ist.

8. Gerät nach Anspruch 4 oder 5, dadurch gekennzeichnet, daß das Verriegelungsglied (34) von einem Arm (33) getragen ist, der gegen die Wirkung einer Feder (36) um einen aufrechten Stift (31) oder dergleichen schwenkbar ist.

9. Gerät nach Anspruch 8, dadurch gekennzeichnet, daß sich das oder jedes Verriegelungsglied (34) vorne an dem oder dem jeweiligen schwenkbaren Arm (33) befindet, während der in bezug auf die Arbeitsrichtung (A) des Gerätes hintere Bereich dieses Armes (33) als von Hand betätigbare Handhabe (35) ausgebildet ist.

10. Gerät nach Anspruch 8 oder 9, dadurch gekennzeichnet, daß die oder jede Feder (36) den entsprechenden aufrechten Stift (31) oder dergleichen umgibt und derart ausgebildet ist, daß sie einer Verlagerung des zugehörigen schwenkbaren Armes (33) um diesen aufrechten Stift (31) oder dergleichen in einer Richtung federnd entgegenwirkt.

11. Gerät nach einem der Ansprüche 1 bis 10, dadurch gekennzeichnet, daß das Gerät zwei mit horizontalem Abstand voneinander angeordnete, schwenkbare polygonale Gestänge (28) aufweist, von denen jedes mit entsprechenden Einstellteilen (25, 26, 27) versehen ist.

12. Gerät nach einem der Ansprüche 1 bis 11, dadurch gekennzeichnet, daß die Boden-Sammelvorrichtung (56) eine Mehrzahl langgestreckter Elemente (49) aufweist, von denen jedes einen nach unten ragenden zinkenartigen, in den Boden greifenden Abschnitt (50) aufweist, und daß die in den Boden greifenden Abschnitte (50) mit seitlichem Abstand nebeneinander angeordnet sind.

**Revendications**

1. Appareil pour cultiver le sol comprenant une partie de chassis (1) mobile au dessus du sol, une rangée d'organes de travail du sol (3) laquelle s'étend sensiblement horizontalement, perpendiculairement ou tout au moins transversalement au sens de marche (A) prévu pour le travail de la machine, avec chaque organe (3) pouvant être entraîné par un moteur pour tourner autour d'un axe (2) s'étendant vers le haut, chaque organe (3) ayant au moins un outil (5) de travail du sol dépassant vers le bas, un rouleau (9) d'appui au sol dont le niveau physique est réglable par rapport à celui des organes (3) de travail du sol, ce rouleau (9) étant situé à l'arrière de ces organes (3) par rapport audit sens de marche (A), et un organe de ramassage du sol (56) de forme allongée, situé au niveau du sol ou au dessus de ce niveau et entre les organes (3) de travail du sol et le rouleau (9) d'appui au sol par rapport audit sens de marche (A), caractérisé en ce que l'organe (56) de ramassage du sol, de forme allongée, est relié de manière réglable au reste de l'appareil grâce à des moyens qui comprennent au moins une tringlerie de liaison articulée polygonale (28) et des éléments (25, 26, 27) au moyen desquels le niveau de cet organe de ramassage (56) peut être modifié par rapport à celui de ladite tringlerie ou des dites tringleries (28), lesdits éléments de réglage (25, 26, 27) étant disposés à l'arrière de ladite ou desdites tringleries polygonales articulées (28) par rapport audit sens de marche (A), y compris les pivots postérieurs (25, 27) de ladite tringlerie ou de chacune des tringleries polygonales articulées (28) et au moins un bras vertical (26) dans lequel est ménagée une pluralité de trous (29) espacés entre eux pour chacun desdits pivots postérieurs, le bras vertical ou chacun des bras verticaux (26) étant un organe de la ou des tringleries polygonales articulées (28) correspondante(s).

2. Appareil selon la revendication 1, caractérisé en ce que la tringlerie ou chacune des tringleries (28) comprend des bras inférieurs (22) et des bras supérieurs (23), un ressort (41) étant prévu pour contrebalancer un mouvement vers le haut desdits bras inférieurs et supérieurs.

3. Appareil selon la revendication 1 ou 2, caractérisé en ce que la ou les tringleries articulées polygonales est une tringlerie articulée quadrilatérale (28) dont deux des axes de pivotement (24) sont situés en avant, et dont deux des axes de pivotement (25, 27) sont situés en arrière des organes (3) de travail du sol par rapport au sens de marche (A) prévu pour le travail de l'appareil.

4. Appareil selon la revendication 3, caractérisé en ce que la tringlerie ou chacune des tringleries articulées en quadrilatère (28) comprend des bras inférieurs (22) et des bras supérieurs (23), et en ce que les positions des extrémités postérieures desdits bras (22, 23) sont réglables l'une par rapport à l'autre en utilisant lesdits éléments de réglage, lesquels sont également utilisables pour changer la position de l'organe (56) de ramassage du sol.

5. Appareil selon l'une quelconque des revendications précédentes, caractérisé en ce qu'un moyen (33, 34, 37) est prévu pour retenir, en n'importe quelle position choisie parmi plusieurs différentes positions de réglage, l'arrière, par rapport au sens de marche (A) prévu pour le travail de l'appareil, de la ou de chacune des tringleries polygonales articulées (28).

6. Appareil selon la revendication 5, caractérisé en ce qu'un bras (22) de la ou de chacune des tringleries polygonales articulées (28) coopère avec un loquet (34) disposé de manière à pouvoir entrer dans une quelconque ouverture choisie parmi une pluralité d'ouvertures (37) ménagées en étant espacées l'une de l'autre dans un organe de support (21) monté au sommet de la partie de chassis (1) qui supporte en rotation les organes (3) de travail du sol.

7. Appareil selon la revendication 6, caractérisé en ce que lesdites ouvertures (37) sont sous la forme d'encoches disposées selon une rangée en arc de cercle à des distances égales d'un axe défini par le pivot inférieur antérieur (24) de la ou des tringleries polygonales articulées (28).

8. Appareil selon la revendication 4 ou 5, caractérisé en ce que ledit loquet (34) est porté par un bras (33) pouvant être basculé, contre l'action d'un ressort (36), autour d'un pivot ou élément similaire vertical (31).

9. Appareil selon la revendication 8, caractérisé en ce que le loquet (34) ou chacun des loquets (34) est sur l'avant du ou des bras basculants (33) correspondants, tandis que l'arrière de ce bras (33) par rapport au sens de marche (A) prévu pour le travail de l'appareil prend la forme d'une poignée (35) pouvant être actionnée manuellement.

10. Appareil selon la revendication 8 ou 9, caractérisé en ce que le ressort (36) ou chaque ressort (36) est enroulé autour du pivot ou de l'élément similaire vertical (31) correspondant et est disposé élastiquement pour s'opposer au déplacement dans un sens du bras basculant (33) auquel il est associé, autour de ce pivot vertical ou élément similaire (31).

11. Appareil selon l'une quelconque des revendications précédentes, caractérisé en ce qu'il comporte deux tringleries polygonales articulées (28) espacées horizontalement l'une de l'autre, chacune étant munie d'éléments de réglage correspondants (25, 26, 27).

12. Appareil selon l'une quelconque des revendications précédentes, caractérisé en ce que l'organe (56) de ramassage du sol comprend une pluralité d'éléments allongés (49) dont chacun a une partie (50) en forme de dent dépassant vers le bas pour s'engager dans le sol, et en ce que lesdites parties (50) s'engageant dans le sol sont disposées côte-à-côte en étant espacées l'une de l'autre.

FIG. 1

EP 0 181 044 B1

Fig. 2

Fig. 4

EP 0 181 044 B1

FIG. 3

FIG. 5

3